# EUROPEAN PATENT APPLICATION

(11) **EP 2 045 972 A1**
(43) Date of publication of application: **08.04.2009**
(21) Application number: 07816455.5
(22) Date of filing: 28.09.2007
(51) Int. Cl.: H04L 12/46

(54) **MULTIPLEX METHOD OF VLAN SWITCHING TUNNEL AND VLAN SWITCHING DOMAIN**

(30) Priority: 29.09.2006 CN 200610140663
(71) Applicant: Huawei Technologies Co., Ltd., Shenzhen, Guangdong Province 518129 (CN)
(72) Inventor: FAN, Lingyuan, Shenzhen, Guangdong 518129 (CN)
(74) Representative: Körber, Martin Hans
(86) International application number: PCT/CN2007/002841
(87) International publication number: WO 2008/043265

(57) **Abstract**

A multiplex method of a virtual local area network (VLAN) switching (VS) tunnel includes the following steps. An ingress edge node of the VS tunnel maps a received customer data unit onto one virtual channel (VC) borne by the VS tunnel, and encapsulates the customer data unit into a VS tunnel Ethernet frame including a VS tag, a VC tag, and the customer data unit. The VC tag identifies the different VCs borne by the VS tunnel. An intermediate node of the VS tunnel switches the VS tunnel Ethernet frame according to the VS tag, and transports the customer data unit and the VC tag transparently in the VS tunnel. An egress edge node of the VS tunnel terminates the VS tunnel and the VC, recovers the customer data unit, and forwards the data according to the VC tag. A corresponding VS domain is also described. The multiplex of the VS tunnel is realized, and the utilization of the VS tunnel is improved.

## Description

### BACKGROUND OF THE INVENTION

### Field of the Technology

The present invention relates to an Ethernet technology, and more particularly to a multiplex method of a virtual local area network (VLAN) switching (VS) tunnel and a VS domain.

### Background of the Invention

Ethernet technology becomes one of the main technologies for building a metropolitan area network in the future and is widely applied at each level of the broadband metropolitan area network for its concise and sound openness, significant cost advantage, wide applicability and recognition.

Meanwhile, the industry has clearly realized that problems in five aspects of scalability, reliability, hard quality of service (QoS) assurance, time division multiplex (TDM) support, and service management need to be solved, so as to turn the Ethernet technology into a carrier Ethernet (CE).

Scalability: a number of service instances and the scalability of converged bandwidth;

Reliability: fast failure recovery protection at a level as high as 50 milliseconds;

Hard QoS assurance: providing hard end-to-end QoS assurance;

TDM support: supporting conventional TDM services and applications; and

Service management: carrier-grade service provision and operation administration maintenance (OAM) capability.

Centering on the five major aspects, the providers, equipment suppliers, and various standard organizations are actively making researches on the evolution of the Ethernet technology to the CE. Currently, the technical trends for research mainly include Ethernet over multiple protocol label switching (MPLS) (EoMPLS), provider backbone transport (PBT), virtual local area network (VLA) switching (VS), and the like.

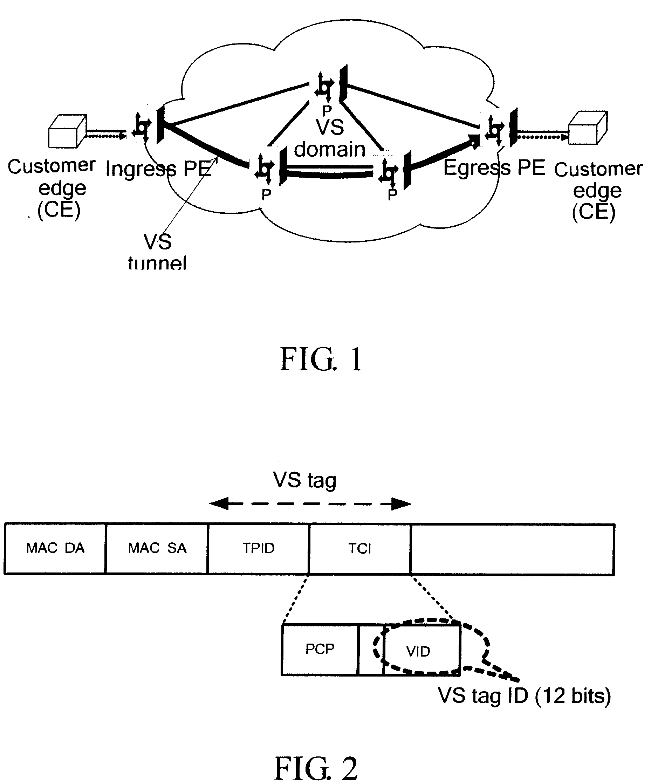

The basic principle of the existing VS technology is shown in FIG 1. A tag switching is performed by a VLAN tag in an Ethernet frame to establish a VS tunnel from one provider edge (PE) to the other PE in a VS domain. When a customer data unit from a customer edge (CE) enters the VS domain, an ingress PE selects an appropriate VS tunnel to transfer the traffic flow. The traffic flow is switched by several intermediate providers (Ps) in the VS tunnel and finally reaches an egress PE. The Egress PE terminates the tunnel, obtains the customer data unit, and forwards the customer data unit to the CE.

When the customer data unit reaches the VS domain from the CE, the ingress PE performs the following processing:

1) First, it is determined to which forwarding equivalence class (FEC) that the customer data unit belongs according to a policy. The policy is flexible, and may be based on an MAC address, an IP address (such as a destination IP address and an IPv4 quintuple), an Ingress Port, an Ingress Port + Ingress VLAN ID, etc.

2) The traffic flow is mapped to a VS tunnel according to the FEC to which the traffic flow belongs, and an egress port and an egress VLAN corresponding to the VS tunnel are obtained.

3) The tunnel Ethernet frame is sent out from the corresponding egress port after being encapsulated. The Ethernet frame includes a destination MAC (MAC-DA), a source MAC (MAC-SA), a VLAN tag (Egress VLAN), and a payload.

The VS tunnel Ethernet frame is forwarded in the VS domain along the VS tunnel. After the VS tunnel Ethernet frame reaches the P equipment, the P performs the following processing:

1) A VS table is searched according to the ingress port and the ingress VLAN of the Ethernet frame, so as to obtain the egress port and the egress VLAN.

2) The original ingress VLAN in the Ethernet frame is replaced by the egress VLAN, the Ethernet frame is re-encapsulated and then sent out from the corresponding egress port.

When the VS tunnel Ethernet frame reaches the end of the VS tunnel, the egress PE performs the following processing:

1) The VS tunnel is terminated and the tunnel Ethernet frame is decapsulated.

2) The customer data unit is restored and forwarded to the corresponding CE equipment. The forwarding rule is flexible, for example, forwarding according to the IP address, MAC address, ingress port + ingress VLAN, or other information.

Currently, the VS technology may have two kinds of VS tags for switching:

The first VS tag switching method is to perform the switching by a layer of VLAN tags as a VS tag, as shown in FIG 2.

The VLAN tag may be the V-TAG (VLAN-TAG) in the Ethernet frame structure defined by the IEEE 802.1q, or the service VLAN tag (S-TAG) in the VLAN stack (QinQ) Ethernet frame structure defined by the IEEE 802.1ad. In this method, the length of the VS tag ID is equal to that of VS tag identifier (VID) in the VLAN tag, and is only 12 bits.

Since the above method uses one layer of VLAN tags as the VS tag for switching and the VID is limited to 12 bits, the number of VS tunnels borne on each link cannot break through 4096 (i.e., 2¹²), and thus the method has scalability problem and is difficult to be applied in large scale networks.

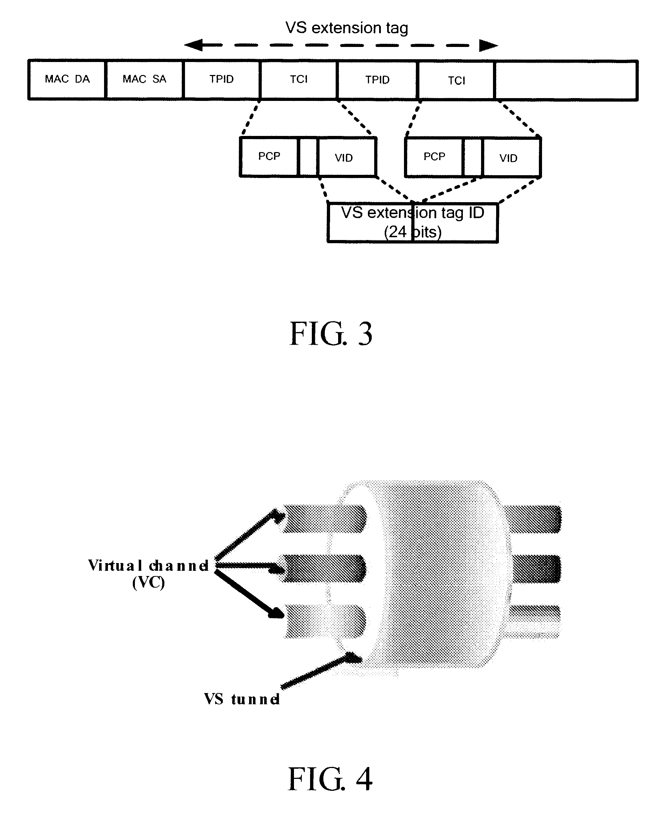

The second VS tag switching method is to perform the switching using a combination of two layers of VLAN tags as a VS extension tag, as shown in FIG. 3.

The two layers of VLAN tags may be the S-TAG and customer VLAN tag (C-TAG) in the QinQ Ethernet frame structure defined by the IEEE 802.1ad, or other combinations, for example, two S-TAGs or two C-TAGs. The length of a VS extension tag ID is equal to that of two VIDs, and reaches 24 bits. Therefore, the number of VS connections borne on each link may reach 16M, and thus the VLAN scalability problem is solved. However, such method needs to combine two layers of VLAN tags as a VS extension tag for switching in the forwarding, and is considered as changing the semanteme of a tag protocol identifier (TPID) defined in existing standards. Being a non-routine practice, the method currently has not been well accepted in the industry.

The existing VS technology does not provide an explicit multiplex method of the VS tunnel, in which one VS tunnel can only bear one VS connection, and a VS tunnel needs to be established for each VS connection respectively, so that the utilization of the VS tunnel is low, and a large number of tunnels need to be constructed, which causes the scalability problem of 12-bit VS to be more serious. On the other hand, an implicit multiplex in which multiple services are connected to one VS tunnel by service application inevitably causes too tight coupling between the service flow and the VS bearer technology and complicated service processing, which is disadvantageous in the development of service.

### SUMMARY OF THE INVENTION

In embodiments, the present invention is directed to a multiplex method of a VS tunnel and a VS domain, so as to solve the problem of low utilization of the VS tunnel in the prior art.

In an embodiment, the present invention provides a multiplex method of a VS tunnel, includes: an ingress edge node of a VS tunnel maps a received customer data unit onto one virtual channel (VC) borne by the VS tunnel, and encapsulates the customer data unit into a VS tunnel Ethernet frame, wherein the VS tunnel Ethernet frame includes a VS tag, a VC tag, and the customer data unit, wherein the VC tag identifies the VC is borne by the VS tunnel; an intermediate node of the VS tunnel switches the VS tunnel Ethernet frame according to the VS tag, and transports the customer data unit and the VC tag transparently in the VS tunnel; an egress edge node of the VS tunnel terminates the VS tunnel and the VC, recovers the customer data unit, and forwards data according to the VC tag.

In an embodiment, the present invention additionally provides a VS domain including several edge nodes and intermediate nodes. An ingress edge node and an egress edge node establish a VS tunnel via one or more intermediate nodes. The ingress edge node of the VS tunnel is provided with a first function module adapted to receive a customer data unit, map the customer data unit onto one VC borne by the VS tunnel, and encapsulate it into a VS tunnel Ethernet frame, wherein the VS tunnel Ethernet frame includes a VS tag, a VC tag, and the customer data unit, wherein the VC tag identifies the VC is borne by the VS tunnel; the intermediate nodes of the VS tunnel switch the VS tunnel Ethernet frame according to the VS tag; the egress edge node of the VS tunnel includes a second function module adapted to receive the VS tunnel Ethernet frame, terminate the VS tunnel and the VC, recover the customer data unit, and forward data according to the VC tag.

In an embodiment, the present invention further provides an ingress edge node of a VS tunnel in a VS domain, which includes a first function module. The first function module includes a first receiving unit, a mapping unit, and an encapsulation unit; the first receiving unit is a sub-module adapted to receive a customer data unit; the mapping unit is a sub-module adapted to map the customer data unit onto one VC borne by the VS tunnel; the encapsulation unit is a sub-module adapted to encapsulate the customer data unit mapped onto the VC into a VS tunnel Ethernet frame, wherein the VS tunnel Ethernet frame includes a VS tag, a VC tag, and the customer data unit. The VC tag identifies the VC borne by the VS tunnel. The VS tag is a basis for an intermediate node of the VS tunnel to switch the VS tunnel Ethernet frame.

In an embodiment, the present invention further provides an egress edge node of a VS tunnel in a VS domain, which includes a second function module. The second function module includes: a sub-module adapted to receive a VS tunnel Ethernet frame, a sub-module adapted to terminate the VS tunnel and a VC, a sub-module adapted to recover a customer data unit, and a sub-module adapted to forward the recovered customer data unit according to the VC tag.

The beneficiary effects of the embodiments of the present invention are as follows.

(1) With the embodiments of the present invention, the ingress edge node of the VS tunnel maps a received customer data unit onto one VC borne by the VS tunnel, and encapsulates it into a VS tunnel Ethernet frame, wherein the VS tunnel Ethernet frame includes a VS tag, a VC tag, and the customer data unit. The VC tag identifies different VCs borne by the VS tunnel. The intermediate node of the VS tunnel switches the VS tunnel Ethernet frame according to the VS tag, and transports the customer data unit and the VC tag transparently in the VS tunnel. The egress edge node of the VS tunnel terminates the VS tunnel and the VC, recovers the customer data unit, and forwards data according to the VC tag. In this way, an explicit multiplex of the VS tunnel is realized and the utilization of the VS tunnel is improved by bearing multiple VCs on one VS tunnel in the embodiments of the present invention, which greatly reduces the number of constructed VS tunnels and alleviates the scalability problem resulted from 12-bit VS.

(2) With the method according to the embodiment of the present invention, the customer data unit is borne on the VC, so that a split tunneling between the service layer and the bearer layer is realized to a certain extent, and the realization of the service layer is independent of the bearer tunnel technology, thereby creating conditions for the VS tunnel bearer to bear some existing services, such as the pseudo wire emulation edge to edge (PWE3), virtual private LAN service (VPLS), and layer 3 virtual private network (L3VPN).

(3) In the embodiments of the present invention, only edge nodes in the VS domain need to process the VC, while the intermediate nodes in the VS domain have a simple function and only needs to perform a VS switching on few VS tunnels, which definitely reduces the network deployment cost as well as operation maintenance cost.

### BRIEF DESCRIPTION OF THE DRAWINGS

FIG. 1 is a schematic view illustrating principles of a VS switching in the prior art;

FIG. 2 is a schematic structural view of a data frame in which a layer of VLAN tags are used as a VS tag in the prior art;

FIG. 3 is a schematic structural view of a data frame in which two layers of VLAN tags are used as a VS tag in the prior art;

FIG. 4 is a schematic view illustrating a relation between a VS tunnel and VCs in a method according to an embodiment of the present invention;

FIG. 5 is a schematic view illustrating a flow of data transportation using the method according to the embodiment of the present invention;

FIG 6 is a view illustrating a first embodiment of an encapsulation of a VS tunnel Ethernet frame using the method in the present invention;

FIG 7 is a view illustrating a second embodiment of an encapsulation of a VS tunnel Ethernet frame using the method in the present invention; and

FIG. 8 is a view illustrating a third embodiment of an encapsulation of a VS tunnel Ethernet frame using the method in the present invention.

### DETAILED DESCRIPTION OF THE EMBODIMENTS

Basic principles of a multiplex method of a VS tunnel provided in an embodiment of the present invention are as follows:

One VS tunnel bears multiple virtual channels (VCs) at the same time, and the VCs are distinguished by different VC identifiers (VCIs). An ingress edge node of the VS tunnel maps a customer data unit onto one VC of the VS tunnel, and encapsulates the customer data unit into a VS tunnel Ethernet frame, the VS tunnel Ethernet frame includes a VS tag, a VC tag, and the customer data unit. The VC tag is adapted to identify the different VCs borne by the VS tunnel. The customer data unit and the VC tag are transported transparently in the VS tunnel. After the VS tunnel Ethernet frame reaches an egress edge node of the VS tunnel, the egress edge node of the VS tunnel restores the customer data unit and forwards the customer data unit according to the VC tag and other information.

An address space of the VC tag is distributed in the following three manners:

1) The address space of the VC tag is distributed respectively based on each VS tunnel. Each VS tunnel has an independent VC tag distribution space, and the tag required by the VC is distributed uniformly from a VC tag address space of a VS tunnel bearing the VC.

2) The address space of the VC tag is distributed respectively based on each edge node. Each PE node has an independent VC tag distribution space, and the tag required by the VC is distributed uniformly from a VC tag address space of a terminating node (egress PE) of a VS tunnel bearing the VC.

3) The address space of the VC tag is distributed uniformly based on an entire VS domain. The entire VS domain shares a VC tag distribution space, and the tag required by the VC is distributed uniformly from the VC tag address space of the VS domain.

FIG. 4 is a schematic view illustrating a relation between the VS tunnel and the VCs, in which one VS tunnel bears three VCs at the same time.

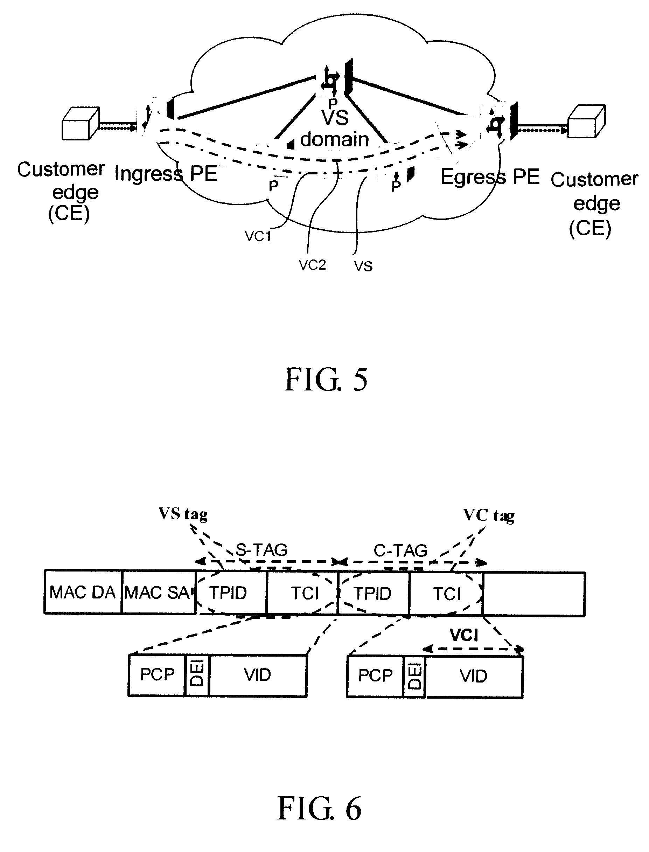

FIG. 5 is a schematic view illustrating a specific realization flow of the method according to the embodiment of the present invention. The flow includes the following steps.

In Step 1, an ingress edge node (ingress PE) of a VS tunnel maps a customer data unit onto one VC of the VS tunnel. FIG. 5 shows that the VS tunnel bears two VCs, namely, VC1 and VC2. The ingress edge node of the VS tunnel may map the received customer data unit onto the VC1 or the VC2, encapsulate it into a VS tunnel Ethernet frame, the VS tunnel Ethernet frame includes a VS tag, a VC tag, and the customer data unit, and send the VS tunnel Ethernet frame to an intermediate node via an egress port.

The specific mapping method of Step I is specifically descried as follows:

A first corresponding relation between the customer data unit and the VS tunnel and VC is established on the ingress PE, for example:

VC FEC determination policy -> VS tunnel identifier + VC tag;

wherein the VS tunnel identifier uniquely identifies one VS tunnel. The VS tunnel identifier may be an ID distributed uniformly or directly employ forwarding information of the VS tunnel, for example, egress port + egress VLAN of the VS tunnel on the ingress PE. If the VS tunnel identifier employs an ID distributed uniformly, the corresponding egress port and egress VLAN of the tunnel and other forwarding information are obtained by matching a "VS tunnel forwarding table" according to the ID.

The VC FEC determination policy defines the FEC determination rule of the VC bearer and may be selected flexibly upon service requirements. For example, a VC FEC may be described according to an MAC address, a VLAN + MAC, an IP address (for example, a destination IP address, an IPv4 quintuple, etc.), a VPN identifier + IP address, an ingress port, an ingress port + VLAN, or the like.

After receiving the customer data unit, the ingress edge node of the VS tunnel determines an FEC to which the customer data unit belongs according to the determination policy, queries the established mapping relation by using the FEC as an index field, maps the customer data unit onto the VC of the VS tunnel according to the VS tunnel identifier and VC tag obtained by query, and encapsulates the customer data unit into a VS tunnel Ethernet frame, the VS tunnel Ethernet frame includes the VS tag, the VC tag, and the customer data unit.

The following embodiments are provided in the embodiment of the present invention for the specific realization of the encapsulation of the VS tunnel Ethernet frame in Step 1.

In a first embodiment, the VS tunnel Ethernet frame is encapsulated using a QinQ Ethernet frame defined by the IEEE 802.1ad. Referring to FIG. 6, the VS tunnel employs the QinQ Ethernet frame defined by the IEEE 802.1ad in encapsulating, an S-TAG in an external layer is used as the VS tag for the switching of the VS tunnel, and a C-TAG in an internal layer is used as the VC tag for identifying the VC borne by the VS tunnel. In this situation, the length of a VCI is equal to that of one VID, i.e., 12 bits.

Since the QinQ Ethernet frame encapsulation has been generally accepted, the first embodiment has wide applications.

In a second embodiment, the VS tunnel Ethernet frame is encapsulated using an 802.1 ah Ethernet frame.

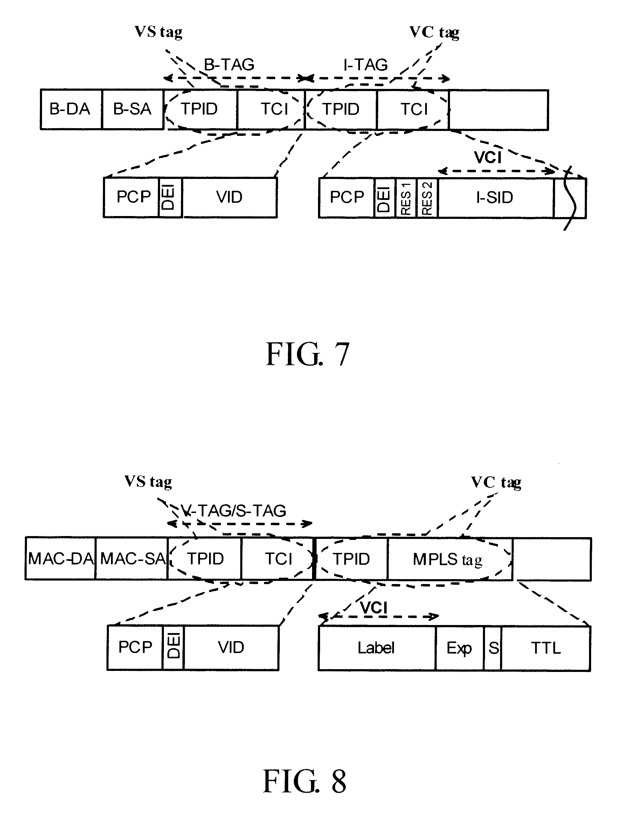

Referring to FIG 7, the VS tunnel Ethernet frame is encapsulated using the Ethernet frame defined by the IEEE 802.1ah, a backbone VLAN tag (B-TAG) in the 802.1ah Ethernet frame encapsulation is used as the VS tag for the switching of the VS tunnel, and a service instance tag (I-TAG) is used as the VC tag. In this situation, the length of a VCI is equal to that of a service instance ID (I-SID) which is 24 bits.

Therefore, with the second embodiment, the VC address space is sufficient.

In a third embodiment, the encapsulation is performed by using a V-TAG/S-TAG in an Ethernet frame header as the VS tag, and an MPLS label as a VC tag.

Referring to FIG. 8, the VS tunnel employs the V-TAG in the Ethernet frame structure defined by the IEEE 802.1q or the S-TAG in the QinQ Ethernet frame defined by the IEEE 802.1ad as the VS tunnel, and employs the MPLS label as the VC tag. In this situation, the length of a VCI is equal to that of the MPLS label which is 20 bits.

With the third embodiment, the following advantages may be achieved.

a. The Ethernet and MPLS encapsulation are mature enough.

b. The length of the MPLS label guarantees a sufficient VC address space.

c. With this embodiment of the present invention, an intermediate node in the VS domain transports the VC tag transparently, and thus the MPLS forwarding capability is not required.

d. The VC tag, a pseudo wire (PW) label defined by the PWE3 and VPLS, and an internal layer tag defined by the L3VPN are completely compatible, which is advantageous to the application of the VS technology to the PWE3, VPLS, and L3VPN.

e. It is convenient when the VS domain interworks with an MPLS network, for example, the PW label does not need to be converted when the PW traverses through the VS domain and the MPLS network.

In Step 2, the intermediate node (i.e., P node) of the VS tunnel only needs to perform a switching according to the VS tag, and transport the customer data unit and the VC tag transparently.

In Step 3, an egress edge node (i.e., egress PE) of the VS tunnel terminates the VS tunnel and the VC, recovers the customer data unit, obtains corresponding forwarding information according to the VC tag and other information, and forwards the customer data unit.

In Step 3, a forwarding rule of the customer data unit after the VC is terminated is established on the egress PE, for example, the following second corresponding relation is established.

VS tunnel identifier -> VC forwarding rule + VC forwarding information; or

VS tunnel identifier, VC tag -> VC forwarding rule + VC forwarding information;

wherein the VS tunnel identifier uniquely identifies one VS tunnel. Similarly, the VS tunnel identifier may be an ID distributed uniformly or directly employ the forwarding information of the VS tunnel, for example, the ingress port and ingress VLAN of the VS tunnel on the egress PE.

The VC forwarding rule + VC forwarding information designates a rule of forwarding a customer data frame borne on the VC after the VS tunnel and the VC are terminated, including a forwarding rule and required forwarding information. The forwarding rule is flexible, for example, by a VLAN, by an MAC forwarding, or by an IP forwarding, etc. The forwarding information required by each forwarding rules is different. For example, when the VLAN is employed, the forwarding information may be an egress port, or an egress port + VLAN ID, etc. When the MAC forwarding is employed, the forwarding information may be a VLAN ID. When the IP forwarding is employed, the forwarding information may be a virtual private network identifier (VPN ID).

When the VC tag address space is distributed based on each VS tunnel respectively, index information of the above forwarding rule further includes a VS tunnel identifier. The egress edge node of the VS tunnel uniquely determines one VC according to the VS tunnel identifier and the VC tag at the same time, obtains the forwarding information corresponding to the VC, and forwards the customer data unit using a corresponding forwarding rule thereof.

The customer data is transmitted via the VS tunnel multiplex through the above three steps.

According to the above method provided in the embodiment of the present invention, a VS domain having a corresponding function and including several edge nodes and intermediate nodes is provided in the embodiment of the present invention. An ingress edge node and an egress edge node establish a VS tunnel via one or more intermediate nodes. The ingress edge node of each VS tunnel includes a first function module adapted to map a received customer data unit onto one VC borne by the VS tunnel, and encapsulate the customer data unit into a VS tunnel Ethernet frame including a VS tag, a VC tag, and the customer data unit. The VC tag identifies different VCs borne by the VS tunnel. The specific encapsulation method of the VS tunnel Ethernet frame is described in the above first, second, and third embodiments, and will not be repeated.

The intermediate nodes of the VS tunnel switch the VS tunnel Ethernet frame according to the VS tag, and transport the customer data unit and the VC tag transparently in the VS tunnel.

The egress edge node of the VS tunnel includes a second function module, and the second function module is adapted to terminate the VS tunnel and the VC, recover the customer data unit, and forward data according to the VC tag.

The ingress edge node of the VS tunnel further includes a first storage module, and the first storage module is adapted to store a first corresponding relation between an FEC to which a customer data unit belongs and a corresponding VS tunnel identifier and VC tag thereof. The specific example of the first corresponding relation is described above and will not be repeated. After the ingress edge node of the VS tunnel receives the customer data unit, the first function module determines the FEC to which the customer data unit belongs according to a predetermined policy, queries the first corresponding relation stored in the first storage module, maps the customer data unit onto the VC of the VS tunnel according to the VS tunnel identifier and VC tag obtained by query, and encapsulates the customer data unit into the VS tunnel Ethernet frame, the VS tunnel Ethernet frame includes the VS tag, the VC tag, and the customer data unit.

The egress edge node of the VS tunnel further includes a second storage module, and the second storage module is adapted to store a second corresponding relation between a VC tag and a corresponding forwarding rule and forwarding information thereof. The specific example of the second corresponding relation is described above and will not be repeated. After terminating the VS tunnel and VC and recovering the customer data unit, the second function module of the egress edge node of the VS tunnel queries the second corresponding relation stored in the second storage module according to the VC tag, obtains the corresponding forwarding information, and forwards the customer data unit using the corresponding forwarding rule.

The ingress edge nodes or egress edge nodes of different VS tunnels in the VS domain may be the same edge node.

According to the above method provided in the embodiment of the present invention, an ingress edge node of a VS tunnel in a VS domain including a first function module is provided in the embodiment of the present invention. The first function module may include a sub-module adapted to receive a customer data unit, a sub-module adapted to map the customer data unit onto one VC borne by the VS tunnel, and a sub-module adapted to encapsulate the customer data unit mapped onto the VC into a VS tunnel Ethernet frame, the VS tunnel Ethernet frame includes a VS tag, a VC tag, and the customer data unit. The VC tag identifies the VC borne by the VS tunnel. The VS tag is a basis for an intermediate node of the VS tunnel to switch the VS tunnel Ethernet frame.

According to the above method provided in the embodiment of the present invention, an egress edge node of a VS tunnel in a VS domain including a second function module is provided in the embodiment of the present invention. The second function module may include a sub-module adapted to receive a VS tunnel Ethernet frame, a sub-module adapted to terminate the VS tunnel and a VC, a sub-module adapted to recover a customer data unit, and a sub-module adapted to forward the recovered customer data unit according to the VC tag.

In view of the above, with the embodiment of the present invention, the ingress edge node of the VS tunnel maps a received customer data unit onto one VC borne by the VS tunnel, and encapsulates the customer data unit into a VS tunnel Ethernet frame, the VS tunnel Ethernet frame includes a VS tag, a VC tag, and the customer data unit. The intermediate node of the VS tunnel switches the VS tunnel Ethernet frame according to the VS tag, and transports the customer data unit and the VC tag transparently in the VS tunnel. The egress edge node of the VS tunnel terminates the VS tunnel and the VC, recovers the customer data unit, and forwards data according to the VC tag. In this way, an explicit multiplex of the VS tunnel is realized and the utilization of the VS tunnel is improved by bearing multiple VCs on one VS tunnel in the embodiment of the present invention, which greatly reduces the number of constructed VS tunnels and alleviates the scalability problem resulted from 12-bit VS.

With the method according to the embodiment of the present invention, the customer data unit is borne on the VC, so that a split tunneling between the service layer and the bearer layer is realized to a certain extent, and the realization of the service layer is independent of the bearer tunnel technology, thereby creating conditions for some existing services of the VS tunnel bearer such as the PWE3, the VPLS, and the L3VPN.

In the embodiment of the present invention, only edge nodes in the VS domain need to process the VC, while the intermediate nodes in the VS domain have a simple function and only need to perform a VS switching on few VS tunnels, which definitely reduces the network deployment cost as well as operation maintenance cost.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A multiplex method of a virtual local area network (VLAN) switching (VS) tunnel, comprising:
mapping, by an ingress edge node of a VS tunnel, a received customer data unit onto a virtual channel (VC) borne by the VS tunnel, and encapsulating the customer data unit into a VS tunnel Ethernet frame, wherein the VS tunnel Ethernet frame comprises a VS tag, a VC tag, and the customer data unit, wherein the VC tag identifies the VC is borne by the VS tunnel;
switching, by an intermediate node of the VS tunnel, the VS tunnel Ethernet frame according to the VS tag, and transporting the customer data unit and the VC tag transparently in the VS tunnel;
terminating, by an egress edge node of the VS tunnel, the VS tunnel and the VC, recovering the customer data unit, and forwarding data according to the VC tag.

2. The method according to claim 1, **characterized in that** the VS tunnel bears more than the VC at the same time.

3. The method according to claim 1, **characterized in that** an address space of the VC tag is distributed based on each VS tunnel respectively; or
an address space of the VC tag is distributed based on the egress edge node of the VS tunnel respectively; or
an address space of the VC tag is distributed based on an entire VS domain uniformly.

4. The method according to claim 1, **characterized in that** a first corresponding relation between a forwarding equivalence class (FEC) to which a customer data unit belongs and a corresponding VS tunnel identifier and the VC tag is pre-established at the ingress edge node of the VS tunnel;
after receiving the customer data unit, the ingress edge node of the VS tunnel determines the FEC to which the customer data unit belongs according to a predetermined policy, queries the first corresponding relation, maps the customer data unit onto the VC of the VS tunnel according to the VS tunnel identifier and VC tag obtained by query, and encapsulates the customer data unit into the VS tunnel Ethernet frame comprising the VS tag, the VC tag, and the customer data unit.

5. The method according to claim 4, **characterized in that** the determining the FEC to which the customer data unit belongs according to the predetermined policy comprises:
determining the FEC to which the customer data unit belongs according to an MAC address or an IP address carried in the customer data unit; or
determining the FEC to which the customer data unit belongs according to an ingress port identifier (ID) of the ingress edge node of the VS tunnel or according to the ingress port ID and an ingress VLAN ID at the same time.

6. The method according to claim 4, **characterized in that** the mapping the customer data unit onto the VC of the VS tunnel and encapsulating the customer data unit into the VS tunnel Ethernet frame, wherein the VS tunnel Ethernet frame comprises a VS tag, a VC tag, and the customer data unit, and the customer data unit specifically comprises:
encapsulating the VS tunnel Ethernet frame using a QinQ Ethernet frame defined by the IEEE 802. 1ad, using a service VLAN tag (S-TAG) as the VS tag for a switching of the VS tunnel, and using a customer VLAN tag (C-TAG) as the VC tag for identifying the VC borne on the VS tunnel; or
encapsulating the VS tunnel Ethernet frame using an Ethernet frame defined by the 802.1ah, using a backbone VLAN tag (B-TAG) as the VS tag for a switching of the VS tunnel, and using a service instance tag (I-TAG) as the VC tag; or
using a V-TAG in an Ethernet frame structure defined by the IEEE 802.1q or an S-TAG in a QinQ Ethernet frame defined by the IEEE 802.1ad as the VS tag for a switching of the VS tunnel, and using a multiple protocol label switching (MPLS) label as the VC tag.

7. The method according to claim 3, **characterized in that** a second corresponding relation between a VC tag and a corresponding forwarding rule and forwarding information is pre-established at the egress edge node of the VS tunnel;
after terminating the VS tunnel and the VC and recovering the customer data unit, the egress edge node of the VS tunnel queries the second corresponding relation according to the VC tag, obtains the corresponding forwarding information, and forwards the customer data unit using the corresponding forwarding rule.

8. The method according to claim 7, **characterized in that** the second corresponding relation further comprises a VS tunnel identifier, when the address space of the VC tag is distributed based on each VS tunnel respectively, the egress edge node of the VS tunnel uniquely determines one VC according to the VS tunnel identifier and the VC tag in the second corresponding relation, obtains the forwarding information corresponding to the VC, and forwards the customer data unit using the corresponding forwarding rule.

9. The method according to claim 7 or 8, **characterized in that** the forwarding rule comprises: using a VS, using an MAC address forwarding, or using an IP address forwarding;
when the VS is used, the corresponding forwarding information comprises an egress port ID or an egress port ID plus a VLAN ID;
when the MAC address forwarding is used, the corresponding forwarding information comprises a VLAN ID; and
when the IP address forwarding is used, the corresponding forwarding information comprises a virtual private network (VPN) identifier (VPN ID).

10. A virtual local area network (VLAN) switching (VS) domain, comprising a plurality of edge nodes and intermediate nodes, an ingress edge node and an egress edge node establishing a VS tunnel via one or more intermediate nodes, **characterized in that** the ingress edge node of the VS tunnel is provided with a first function module adapted to receive a customer data unit, map the customer data unit onto one virtual channel (VC) borne by the VS tunnel, and encapsulate the customer data unit into a VS tunnel Ethernet framee, wherein the VS tunnel Ethernet frame comprises a VS tag, a VC tag, and the customer data unit, wherein the VC tag identifies the VC is borne by the VS tunnel;
the intermediate nodes of the VS tunnel is adapted to switch the VS tunnel Ethernet frame according to the VS tag; and
the egress edge node of the VS tunnel comprises a second function module, wherein the second function module is adapted to receive the VS tunnel Ethernet frame, terminate the VS tunnel and the VC, recover the customer data unit, and forward data according to the VC tag.

11. The VS domain according to claim 10, **characterized in that** one VS tunnel bears more than one VC at the same time.

12. The VS domain according to claim 10, **characterized in that** the ingress edge node of the VS tunnel further comprises a first storage module adapted to store a first corresponding relation between a forwarding equivalence class (FEC) to which a customer data unit belongs and a VS tunnel identifier and VC tag; and
the first function module determines the FEC to which the customer data unit belongs according to a predetermined policy, queries the first corresponding relation stored in the first storage module, and maps the customer data unit onto the VC of the VS tunnel according to the VS tunnel identifier and VC tag obtained by query.

13. The VS domain according to claim 10, 11, or 12, **characterized in that** the egress edge node of the VS tunnel further comprises a second storage module, the second storage module is adapted to store a second corresponding relation between a VC tag and a forwarding rule and forwarding information;
after terminating the VS tunnel and VC and recovering the customer data unit, the second function module of the egress edge node of the VS tunnel is adapted to query the second corresponding relation stored in the second storage module according to the VC tag, obtain the corresponding forwarding information, and forward the customer data unit using the corresponding forwarding rule.

14. The VS domain according to claim 10, 11, or 12, **characterized in that** ingress edge nodes or egress edge nodes of the different VS tunnels are the same edge node.

15. An ingress edge node of a virtual local area network (VLAN) switching (VS) tunnel in a VS domain, comprising a first function module, the first function module comprising:
a sub-module, adapted to receive a customer data unit;
a sub-module, adapted to map the customer data unit onto one virtual channel (VC) borne by the VS tunnel;
a sub-module, adapted to encapsulate the customer data unit mapped onto the VC into a VS tunnel Ethernet frame comprising a VS tag, a VC tag, and the customer data unit, the VC tag identifies the VC is borne by the VS tunnel, and the VS tag is a basis for an intermediate node of the VS tunnel to switch the VS tunnel Ethernet frame.

16. An egress edge node of a virtual local area network (VLAN) switching (VS) tunnel in a VS domain, comprising a second function module, the second function module comprising:
a sub-module, adapted to receive a VS tunnel Ethernet frame;
a sub-module, adapted to terminate the VS tunnel and a virtual channel (VC);
a sub-module, adapted to recover a customer data unit; and
a sub-module, adapted to forward the recovered customer data unit according to a VC tag.
